# EUROPEAN PATENT APPLICATION

(11) **EP 4 407 702 A1**
(43) Date of publication of application: **31.07.2024**
(21) Application number: 23209730.3
(22) Date of filing: 14.11.2023
(51) Int. Cl.: H01M 4/02, H01M 4/133, H01M 4/1393, H01M 4/36, H01M 4/583, H01M 10/0569

(54) **NONAQUEOUS ELECTROLYTE SECONDARY BATTERY**

(30) Priority: 24.01.2023 JP 2023008509
(71) Applicant: Prime Planet Energy & Solutions, Inc., Chuo-ku Tokyo 103-0022 (JP)
(72) Inventor: TAKESHITA, Shuhei, Tokyo, 103-0022 (JP); SHINDO, Yohei, Tokyo, 103-0022 (JP); HOSOE, Kento, Tokyo, 103-0022 (JP)
(74) Representative: Kuhnen & Wacker Patent- und Rechtsanwaltsbüro PartG mbB

(57) **Abstract**

Provided is a nonaqueous electrolyte secondary battery capable of suppressing an increase in resistance caused by repetitive charge and discharge. A nonaqueous electrolyte secondary battery disclosed here includes a positive electrode, a negative electrode, and a nonaqueous electrolyte. The negative electrode includes a negative electrode active material layer containing a negative electrode active material. The negative electrode active material includes first negative electrode active material particles each having an aspect ratio of 1.5 or less and second negative electrode active material particles each having an aspect ratio exceeding 1.5. A mass ratio between the first negative electrode active material particles and the second negative electrode active material particles is 50 : 50 to 95 : 5. In addition, 50% or more of the second negative electrode active material particles are aligned such that an angle between a plane direction of the negative electrode active material layer and a major axis of the second negative electrode active material particle is 30° or more. The nonaqueous electrolyte contains a nonaqueous solvent and an electrolyte salt. The nonaqueous solvent contains 1 to 30% by volume of a carboxylate ester having 4 or less carbon atoms.

## Description

### TECHNICAL FIELD

The present disclosure relates to a nonaqueous electrolyte secondary battery.

### BACKGROUND ART

Recent nonaqueous electrolyte secondary batteries such as lithium ion secondary batteries are suitably used for, for example, portable power supplies for devices such as personal computers and portable terminals, and vehicle driving power supplies for vehicles such as battery electric vehicles (BEVs), hybrid electric vehicles (HEVs), and plug-in hybrid electric vehicles (PHEVs).

A typical negative electrode of a nonaqueous electrolyte secondary battery includes a negative electrode active material layer containing a negative electrode active material. Known techniques for enhancing characteristics of a nonaqueous electrolyte secondary battery are a technique using two or more types of negative electrode active material particles (see, for example, Patent Document 1) and a technique of aligning negative electrode active material particles with a high aspect ratio (see, for example, Patent Document 2).

### CITATION LIST

### PATENT DOCUMENT

Patent Document 1: JP2018-129212A
Patent Document 2: JP6057124B1

### SUMMARY OF THE INVENTION

For application as vehicle driving power supplies, there has been an increasing demand for enhancing capacity of nonaqueous electrolyte secondary batteries from the viewpoint of increasing traveling distance of vehicles. Through a study, inventors of the present disclosure have found that in the case of increasing density and dimensions of a negative electrode active material layer in order to enhance capacity of a nonaqueous electrolyte secondary battery, for example, an increase in resistance caused by repetitive charge and discharge of the nonaqueous electrolyte secondary battery tends to be accelerated. Therefore, to meet the demand for enhanced capacity of nonaqueous electrolyte secondary batteries, development of a new technique capable of suppressing an increase in resistance caused by repetitive charge and discharge has become an issue.

Embodiments of the present disclosure provide nonaqueous electrolyte secondary batteries capable of suppressing an increase in resistance caused by repetitive charge and discharge.

A nonaqueous electrolyte secondary battery disclosed here includes a positive electrode, a negative electrode, and a nonaqueous electrolyte. The negative electrode includes a negative electrode active material layer containing a negative electrode active material. The negative electrode active material includes first negative electrode active material particles each having an aspect ratio of 1.5 or less and second negative electrode active material particles each having an aspect ratio exceeding 1.5. A mass ratio between the first negative electrode active material particles and the second negative electrode active material particles is 50 : 50 to 95 : 5. In addition, 50% or more of the second negative electrode active material particles are aligned such that an angle between a plane direction of the negative electrode active material layer and a major axis of the second negative electrode active material particle is 30° or more. The nonaqueous electrolyte contains a nonaqueous solvent and an electrolyte salt. The nonaqueous solvent contains 1 to 30% by volume of a carboxylate ester having 4 or less carbon atoms.

This configuration can provide nonaqueous electrolyte secondary batteries capable of suppressing an increase in resistance caused by repetitive charge and discharge.

### BRIEF DESCRIPTION OF THE DRAWINGS

FIG. 1 is a cross-sectional view schematically illustrating an internal structure of a lithium ion secondary battery according to one embodiment of the present disclosure.
FIG. 2 is a schematic disassembled view illustrating a structure of a wound electrode body of a lithium ion secondary battery according to one embodiment of the present disclosure.
FIG. 3 is a schematic cross-sectional view of a negative electrode for describing an angle between a plane direction of a negative electrode active material layer and a major axis of second negative electrode active material particles.
FIG. 4 is a cross-sectional SEM image of a negative electrode of an evaluation lithium ion secondary battery of Example 1 before press treatment.
FIG. 5 is a cross-sectional SEM image of the negative electrode of the evaluation lithium ion secondary battery of Example 1 after press treatment.

### DETAILED DESCRIPTION OF THE PREFERRED EMBODIMENTS

An embodiment of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general technical knowledge in the field. In the drawings, members and parts having the same functions are denoted by the same reference characters for description. Dimensional relationships (e.g., length, width, and thickness) in the drawings do not reflect actual dimensional relationships. It should be noted that a numerical range expressed as "A to B" herein includes A and B.

A "secondary battery" herein refers to a storage device enabling repetitive charging and discharging. A "lithium ion secondary battery" herein refers to a secondary battery that uses lithium ions as charge carriers and performs charge and discharge by movement of charges accompanying lithium ions between positive and negative electrodes.

The present disclosure will be described in detail hereinafter using a flat square lithium ion secondary battery including a flat wound electrode body and a flat battery case as an example, but the present disclosure is not intended to be limited to the embodiment.

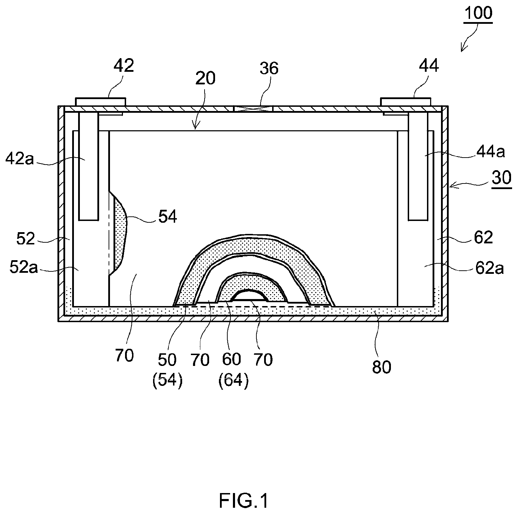

A lithium ion secondary battery 100 illustrated in FIG. 1 is a sealed battery in which a flat wound electrode body 20 and a nonaqueous electrolyte 80 are housed in a flat square battery case (i.e., an outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The battery case 30 has an injection port (not shown) for injecting the nonaqueous electrolyte 80. The positive electrode terminal 42 is electrically connected to a positive electrode current collector plate 42a. The negative electrode terminal 44 is electrically connected to a negative electrode current collector plate 44a. A material for the battery case 30 is, for example, a metal material that is lightweight and has high thermal conductivity, such as aluminum. It should be noted that FIG. 1 does not strictly illustrate the amount of the nonaqueous electrolyte 80.

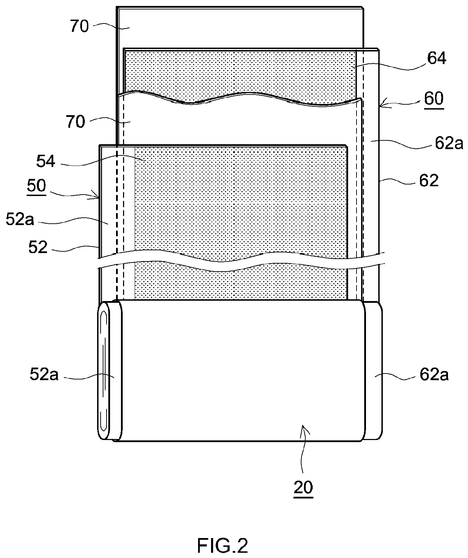

As illustrated in FIGS. 1 and 2, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of an elongated positive electrode current collector 52 along the longitudinal direction. In the negative electrode sheet 60, a negative electrode active material layer 64 is formed on one or each (each in this example) surface of an elongated negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

A load may be applied to the wound electrode body 20 in the thickness direction thereof. The load is desirably 0.1 kN/cm² or more, more desirably 0.4 kN/cm² or more. The load in this range is advantageous especially for application as a power supply for driving HEVs. The load can be a restriction load to be applied to a battery module of lithium ion secondary batteries 100 in the case where lithium ion secondary batteries 100 are constructed in the form of the battery module.

The positive electrode current collector 52 constituting the positive electrode sheet 50 may be a known positive electrode current collector for use in a lithium ion secondary battery, and examples of the positive electrode current collector 52 include sheets or foil of highly conductive metals (e.g., aluminum, nickel, titanium, and stainless steel). The positive electrode current collector 52 is desirably aluminum foil.

Dimensions of the positive electrode current collector 52 are not particularly limited, and may be appropriately determined depending on battery design. In the case of using aluminum foil as the positive electrode current collector 52, the thickness thereof is not particularly limited, and is, for example, 5 µm or more and 35 µm or less, desirably 7 µm or more and 20 µm or less.

The positive electrode active material layer 54 contains a positive electrode active material. The positive electrode active material may be a known positive electrode active material to be used in a lithium ion secondary battery. Specifically, as the positive electrode active material, a lithium composite oxide or a lithium transition metal phosphate compound, for example, may be used. The crystal structure of the positive electrode active material is not specifically limited, and may be, for example, a layered structure, a spinel structure, or an olivine structure.

The lithium composite oxide is desirably a lithium transition metal composite oxide including at least one of Ni, Co, or Mn as a transition metal element, and specific examples of the lithium composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminum composite oxide, and a lithium iron nickel manganese composite oxide. These positive electrode active materials can be used alone or two or more of them may be used in combination.

It should be noted that the "lithium nickel cobalt manganese composite oxide" herein includes not only oxides including Li, Ni, Co, Mn, and O as constituent elements, but also oxides including one or more additive elements besides the foregoing elements. Examples of the additive elements include transition metal elements and typical metal elements, such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I. This also applies in the same manner to, for example, the lithium nickel composite oxide, the lithium cobalt composite oxide, the lithium manganese composite oxide, the lithium nickel manganese composite oxide, the lithium nickel cobalt aluminium composite oxide, and the lithium iron nickel manganese composite oxide.

Examples of the lithium transition metal phosphate compound include lithium iron phosphate (LiFePO₄), lithium manganese phosphate (LiMnPO₄), and lithium manganese iron phosphate.

The positive electrode active material is especially desirably a lithium nickel cobalt manganese composite oxide.

An average particle size (median particle size: D50) of the positive electrode active material is not particularly limited, and is, for example, 0.05 µm or more and 25 µm or less, desirably 1 µm or more and 20 µm or less, more desirably 3 µm or more and 15 µm or less. It should be noted that the average particle size (D50) of the positive electrode active material can be determined by, for example, a laser diffraction/scattering method.

The positive electrode active material layer 54 may include components other than the positive electrode active material, such as trilithium phosphate, a conductive agent, and a binder. Desired examples of the conductive agent include carbon materials such as carbon black (e.g., acetylene black (AB)), carbon nanotubes, and graphite. Examples of the binder include polyvinylidene fluoride (PVdF).

The content of the positive electrode active material in the positive electrode active material layer 54 (i.e., content of the positive electrode active material with respect to the total mass of the positive electrode active material layer 54) is not specifically limited, and is desirably 70% by mass or more, more desirably 80% by mass or more and 97% by mass or less, much more desirably 85% by mass or more and 96% by mass or less. A content of trilithium phosphate in the positive electrode active material layer 54 is not particularly limited, and is desirably 1% by mass or more and 15% by mass or less, more desirably 2% by mass or more and 12% by mass or less. The content of the conductive agent in the positive electrode active material layer 54 is not specifically limited, and is desirably 1% by mass or more and 15% by mass or less, more desirably 3% by mass or more and 13% by mass or less. The content of the binder in the positive electrode active material layer 54 is not specifically limited, and is desirably 1% by mass or more and 15% by mass or less, more desirably 1.5% by mass or more and 10% by mass or less.

The thickness of the positive electrode active material layer 54 is not particularly limited, and is, for example, 10 µm or more and 400 µm or less, desirably 20 µm or more and 300 µm or less.

The positive electrode sheet 50 may include an insulating layer (not shown) at the boundary between the positive electrode active material layer non-formed portion 52a and the positive electrode active material layer 54. The insulating layer may contain ceramic particles, for example.

As the negative electrode current collector 62 constituting the negative electrode sheet 60, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 62 is desirably copper foil.

Dimensions of the negative electrode current collector 62 are not particularly limited, and may be appropriately determined depending on battery design. In the case of using copper foil as the negative electrode current collector 62, the thickness of the foil is not particularly limited, and is, for example, 5 µm or more and 35 µm or less, desirably 6 µm or more and 20 µm or less.

The negative electrode active material layer 64 contains a negative electrode active material. In this embodiment, as the negative electrode active material, first negative electrode active material particles and second negative electrode active material particles having different aspect ratios are used.

Desired examples of constituent materials of the first negative electrode active material particles and the second negative electrode active material particles include carbon materials such as graphite, hard carbon, and soft carbon, and among these materials, graphite is desirable. Graphite may be natural graphite or artificial graphite, and may be amorphous carbon-coated graphite in which graphite is coated with an amorphous carbon material. Graphite is desirably natural graphite, and more desirably amorphous carbon-coated graphite in which natural graphite is coated with an amorphous carbon material.

The first negative electrode active material particles each have an aspect ratio of 1.5 or less, and the second negative electrode active material particles each have an aspect ratio exceeding 1.5. Thus, this embodiment uses the first negative electrode active material particles each having a low aspect ratio and the second negative electrode active material particles each having a high aspect ratio. Accordingly, each of the first negative electrode active material particles has a spherical shape or a near-spherical shape, and each of the second negative electrode active material particles has a large major axis. Thus, the second negative electrode active material particles are easily aligned.

Most typical graphite used in lithium ion secondary batteries are scaly graphite, which generally has an aspect ratio of 2 or more. Thus, scaly graphite may be used as the second negative electrode active material particles.

On the other hand, scaly graphite cannot be used as the first negative electrode active material particles without change. Thus, as the first negative electrode active material particles, graphite obtained by subjecting scaly graphite to spheroidizing (i.e., spheroidized graphite), for example, is typically used. This spheroidizing is known, and specific examples of the spheroidizing method include a method of applying an impact to scaly graphite so as to firmly attach particles thereof to one another while rotating the scaly graphite and thereby granulating the particles until spherical particles of several micrometers to several tens of micrometers are obtained. For such granulation, devices such as a ball mill, a bead mill, a hybridization system manufactured by NARA MACHINERY CO., LTD., Nobilta manufactured by HOSOKAWA MICRON CORPORATION, FM mixer manufactured by NIPPON COKE & ENGINEERING CO., LTD., COMPOSI manufactured by NIPPON COKE & ENGINEERING CO., LTD can be used. At this time, the aspect ratios can be adjusted by changing treatment conditions (specially, treatment time, the number of treatments, etc.).

It should be noted that with respect to the second negative electrode active material particles, the aspect ratio may be adjusted within a range exceeding 1.5 by performing the granulation described above on scaly graphite.

In this embodiment, it is desirable that the first negative electrode active material particles are spheroidized graphite particles and the second negative electrode active material particles are scaly graphite particles, and it is more desirable that the first negative electrode active material particles are spheroidized natural graphite particles and the second negative electrode active material particles are scaly natural graphite particles.

The first negative electrode active material particles have an average aspect ratio of 1.50 or less, desirably 1.45 or less, more desirably 1.40 or less, even more desirably 1.30 or less, especially desirably 1.25 or less. On the other hand, the first negative electrode active material particles have an average aspect ratio of 1.00 or more, and may have an average aspect ratio of 1.10 or more.

The second negative electrode active material particles have an average aspect ratio of more than 1.50, desirably 1.75 or more, more desirably 2.00 or more, even more desirably 2.20 or more, especially desirably 2.40 or more. On the other hand, the second negative electrode active material particles may have an average aspect ratio of 10.00 or less, 7.00 or less, 5.00 or less, or 4.00 or less.

It should be noted that the aspect ratio of the negative electrode active material particle is a ratio of the major axis (or long side) of the negative electrode active material particle to the minor axis (or short side) of the negative electrode active material particle, and can be obtained by a known method. For example, the aspect ratio of the negative electrode active material particle can be obtained by taking a cross-sectional electron microscopic image of the negative electrode active material layer 64 with, for example, a scanning electron microscope (SEM), obtaining the lengths of the minor axis and the major axis of the negative electrode active material particle in this image, and calculating a ratio (major axis/minor axis). The determination of the minor axis and the major axis of the negative electrode active material particle and calculation of a ratio thereof are easily performed with image analysis software (e.g., "ImageJ"). The average aspect ratio of the first negative electrode active material particles can be obtained by arbitrarily selecting 25 or more negative electrode active material particles each having an aspect ratio of 1.5 or less in a cross-sectional electron microscopic image and calculating an average value of these aspect ratios. The average aspect ratio of the second negative electrode active material particles can be obtained by arbitrarily selecting 25 or more negative electrode active material particles each having an aspect ratio exceeding 1.5 in the cross-sectional electron microscopic image and calculating an average value of these aspect ratios. These calculations are also easily performed with image analysis software (e.g., "ImageJ").

A mass ratio between the first negative electrode active material particles and the second negative electrode active material particles (first negative electrode active material particles : second negative electrode active material particles) is 50 : 50 to 95 : 5. When the mass ratio is out of this range, an increase in resistance caused by repetitive charge and discharge of the lithium ion secondary battery 100 is insufficiently suppressed. From the viewpoint of further suppressing an increase in resistance, the mass ratio is desirably 50 : 50 to 82 : 18, more desirably 50 : 50 to 70 : 30, even more desirably 50 : 50 to 65 : 35.

Average particle sizes (median particle size: D50) of the first negative electrode active material particles and the second negative electrode active material particles are not specifically limited, and are, for example, 0.1 µm or more and 50 µm or less, desirably 1 µm or more and 30 µm or less, more desirably 5 µm or more and 20 µm or less. It should be noted that the average particle size (D50) of the negative electrode active material can be determined by, for example, a laser diffraction/scattering method.

In this embodiment, 50% or more of the second negative electrode active material particles are aligned such that an angle between a plane direction of the negative electrode active material layer 64 and the major axis of the second negative electrode active material particle is 30° or more. Desirably, 50% or more of the second negative electrode active material particles are aligned such that the angle between the plane direction of the negative electrode active material layer 64 and the major axis of the second negative electrode active material particles is 45° or more. Desirably, 55% or more (especially 58% or more) of the second negative electrode active material particles are aligned such that the plane direction of the negative electrode active material layer 64 and the major axis of the second negative electrode active material particle is 30° or more. Technical significance of these will be described later.

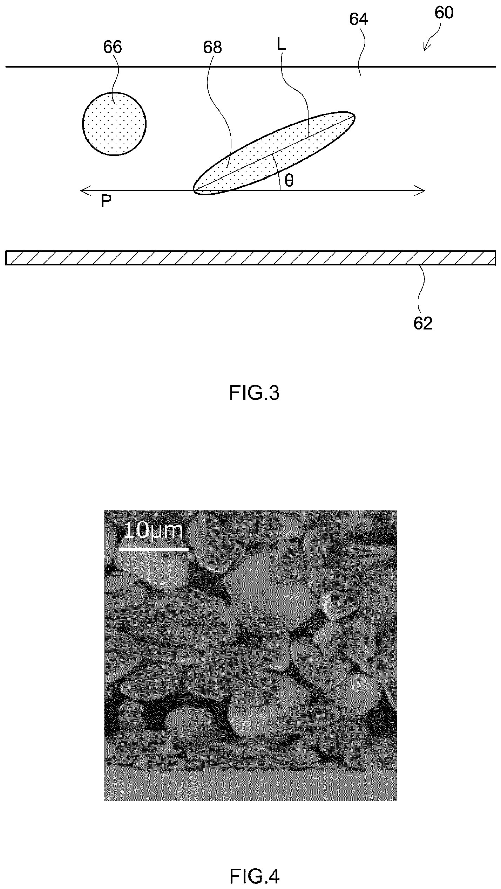

The angle described above will be described with reference to FIG. 3. FIG. 3 is a schematic cross-sectional view of the negative electrode 60, and shows the negative electrode current collector 62 and the negative electrode active material layer 64. In the negative electrode active material layer 64, first negative electrode active material particles 66 and second negative electrode active material particles 68 are shown. For convenience of description, FIG. 3 shows one first negative electrode active material particle 66 and one second negative electrode active material particle 68, but in practice, a plurality of negative electrode active material particles 66 and a plurality of second negative electrode active material particles 68 are included in the negative electrode active material layer 64. The second negative electrode active material particle 68 has a major axis L. The plane direction of the negative electrode active material layer 64 is a direction of the principal surface of the negative electrode active material layer 64 and indicated by arrow P in FIG. 3. Here, the negative electrode active material layer 64 includes two (a pair of) principal surfaces: an outer surface and a surface in contact with the negative electrode current collector 62. Thus, as a plane direction P of the negative electrode active material layer 64, a plane direction of the negative electrode current collector 62 may be employed. An angle θ between this arrow P and the major axis L is an angle between the plane direction of the negative electrode active material layer and the major axis of the second negative electrode active material particle, and an acute angle is employed as this angle.

The alignment state of the second negative electrode active material particles as described above can be obtained by, for example, the following method. Slurry containing first negative electrode active material particles and second negative electrode active material particles in a mass ratio of 50 : 50 to 95 : 5 is prepared. This slurry is applied onto the negative electrode current collector 62 and dried, thereby forming the negative electrode active material layer 64. The negative electrode active material layer 64 is subjected to a press treatment such that the negative electrode active material layer 64 has an apparent density of generally 0.95 g/cm³ or more, especially 1.00 g/cm³ or more.

Negative electrode active material particles each having a high aspect ratio tend to be aligned along the plane direction of the negative electrode active material layer 64 during slurry application, and the press treatment further facilitates alignment along the plane direction of the negative electrode active material layer 64. Thus, in most negative electrode active material particles, the angle between the plane direction (i.e., principal surface direction) of the negative electrode active material layer 64 and the major axis of the negative electrode active material particle is generally less than 30°.

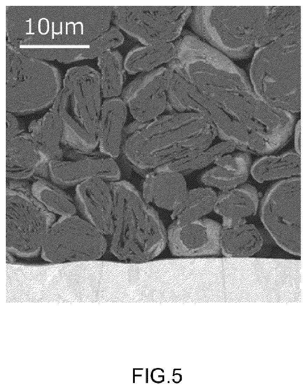

However, under the presence of an appropriate amount of first negative electrode active material particles with a low aspect ratio, appropriate space is generated between negative electrode active material particles after the slurry application (i.e., before the press treatment on the negative electrode active material layer). Then, the press treatment causes the negative electrode active material particles to move to fill the space, and at this time, an alignment state in which the second negative electrode active material particles tilt relative to the plane direction of the negative electrode active material layer 64 is obtained. In this manner, a state where 50% or more of the second negative electrode active material particles are aligned such that the angle between the plane direction of the negative electrode active material layer 64 and the major axis of the second negative electrode active material particle is 30° or more can be obtained. (For reference, FIGS. 4 and 5 show scanning electron microscope (SEM) images of cross sections of the negative electrode active material layer before and after the press treatment, respectively, in Example 1 described later.)

The alignment state of the second active material particles can be observed in the following manner. A cross-sectional electron microscopic image of the negative electrode active material layer 64 is taken with, for example, a scanning electron microscope (SEM), and an aspect ratio of each negative electrode active material particle is calculated. With this calculation, second negative electrode active material particles each having an aspect ratio exceeding 1.5 are identified. The calculation of the aspect ratio can be easily performed with image analysis software (e.g., "ImageJ").

Next, an angle between the plane direction of the negative electrode active material layer 64 and the major axis of the second negative electrode active material particles is determined. This determination of the angle can also be easily performed with image analysis software (e.g., "ImageJ"). It should be noted that the plane direction of the negative electrode active material layer 64 generally coincides with the plane direction of the negative electrode current collector 62. In the case where the plane direction of the negative electrode active material layer 64 coincides with the plane direction of the negative electrode current collector 62, a cross-sectional electron microscopic image of the negative electrode active material layer 64 is taken so that the negative electrode current collector 62 is included in the cross-sectional electron microscopic image, and the plane direction of the negative electrode current collector 62 can be perceived. Thereby, the plane direction of the negative electrode active material layer 64 can be easily specified, and thus, an alignment degree can be easily measured.

The measurement of the angle is performed on arbitrarily selected 20 or more second negative electrode active material particles. The number of second negative electrode active material particles aligned such that the angle described above is 30° or more was counted, and a percentage (%) of these second negative electrode active material particles is calculated from (the number of second negative electrode active material particles aligned at the angle of 30° or more/the number of second negative electrode active material particles measured for the angle) × 100.

The negative electrode active material layer 64 can include components other than the active material, such as a binder or a thickener. Examples of the binder include styrene-butadiene rubber (SBR) and polyvinylidene fluoride (PVdF). Examples of the thickener include carboxymethyl cellulose (CMC).

A content of the negative electrode active material in the negative electrode active material layer 64 is desirably 90% by mass or more, more desirably 95% by mass or more and 99% by mass or less. A content of the binder in the negative electrode active material layer 64 is desirably 0.1% by mass or more and 8% by mass or less, more desirably 0.5% by mass or more and 3% by mass or less. A content of the thickener in the negative electrode active material layer 64 is desirably 0.3% by mass or more and 3% by mass or less, more desirably 0.5% by mass or more and 2% by mass or less.

The thickness of the negative electrode active material layer 64 is not particularly limited, and is, for example, 10 µm or more and 400 µm or less, desirably 20 µm or more and 300 µm or less.

In this embodiment, the apparent density (so-called negative electrode density) of the negative electrode active material layer 64 is not particularly limited. Since the second negative electrode active material particles are aligned with a pressure in pressing during fabrication of the negative electrode 60, the negative electrode active material layer 64 has an apparent density of generally 0.95 g/cm³ or more, desirably 1.00 g/cm³ or more, more desirably 1.10 g/cm³ or more, even more desirably 1.30 g/cm³. The apparent density of the negative electrode active material layer 64 may be 2.00 g/cm³ or less, 1.70 g/cm³ or less, or 1.50 g/cm³ or less. A larger apparent density is more advantageous in application as a vehicle driving power supply (especially application as a vehicle driving power supply for HEVs).

It should be noted that the apparent density of the negative electrode active material layer 64 is a ratio of the weight (g) of the negative electrode active material layer 64 to an apparent density volume (cm³) of the negative electrode active material layer 64 including gaps. For example, the apparent density can be easily calculated as a weight per unit area of negative electrode active material layer 64/thickness of negative electrode active material layer 64, by measuring a weight per unit area of the negative electrode active material layer 64 and a thickness of the negative electrode active material layer 64.

The weight per unit area of the negative electrode active material layer 64 is not particularly limited, and desirably 4 mg/cm² or more, more desirably 8 mg/cm² or more, even more desirably 10 mg/cm² or more, especially desirably 20 mg/cm² or more. The weight per unit area of the negative electrode active material layer 64 may be 50 mg/cm² or less, or 40 mg/cm² or less. A larger weight per unit area is more advantageous in application as a vehicle driving power supply (especially application as a vehicle driving power supply for HEVs).

Examples of the separator 70 include a porous sheet (film) of a resin such as polyethylene (PE), polypropylene (PP), polyester, cellulose, or polyamide. The porous sheet may have a single-layer structure or a laminated structure of two or more layers (e.g., three-layer structure in which PP layers are stacked on each surface of a PE layer). A heat-resistance layer (HRL) containing, for example, ceramic particles may be provided on a surface of the separator 70.

The thickness of the separator 70 is not particularly limited, and is, for example, 5 µm or more and 50 µm or less, desirably 10 µm or more and 30 µm or less. An air permeability of the separator 70 obtained by a Gurley permeability test is not particularly limited, and is desirably 350 sec./100 cc or less.

The nonaqueous electrolyte 80 contains a nonaqueous solvent and an electrolyte salt (also referred to as a supporting electrolyte). In this embodiment, the nonaqueous solvent contains 1% by volume to 30% by volume of a carboxylate ester having 4 or less carbon atoms.

The carboxylate ester having 4 or less carbon atoms has the effect of reducing viscosity of the nonaqueous electrolyte 80. Thus, when a carboxylate ester has 5 or more carbon atoms, viscosity of the nonaqueous electrolyte 80 cannot be sufficiently reduced. Examples of the carboxylate ester having 4 or less carbon atoms include methyl acetate, ethyl acetate, vinyl acetate, and methyl propionate. Among these, methyl acetate is desirable because of especially high effect of reducing viscosity of the nonaqueous electrolyte 80.

The nonaqueous solvent includes an organic solvent other than the carboxylate ester. Examples of the organic solvent include carbonates, ethers, nitriles, sulfones, and lactones, and among these, carbonates are especially desirable. Examples of the carbonates include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such organic solvents may be used alone, or two or more of them may be used in combination.

From the viewpoint of higher effect of suppressing an increase in resistance, the nonaqueous solvent desirably contains 15% by volume to 30% by volume of the carboxylate ester having 4 or less carbon atoms. The nonaqueous solvent desirably contains the carboxylate ester having 4 or less carbon atoms and carbonates, and may contain only the carboxylate ester having 4 or less carbon atoms and carbonates. The carbonates desirably contain both chain carbonate and cyclic carbonate.

Desired examples of the electrolyte salt include lithium salts (desirably LiPF₆) such as LiPF₆, LiBF₄, and lithium bis(fluorosulfonyl)imide (LiFSI). A concentration of the electrolyte salt is desirably 0.7 mol/L or more and 1.3 mol/L or less.

The nonaqueous electrolyte 80 may contain components except for the nonaqueous solvent and the electrolyte salt (hereinafter referred to as optional components). Desired examples of the optional components include film forming agents such as vinylene carbonate and an oxalato complex. Among these, the oxalato complex is desirable, and examples of the oxalato complex include lithium bis(oxalato)borate (LiBOB) and lithium difluoro oxalato borate (LiDFOB). When the nonaqueous electrolyte 80 contains the film forming agent, durability of the lithium ion secondary battery 100 can be increased. The concentration of the film forming agent in the nonaqueous electrolyte 80 is not particularly limited, and is, for example, 0.05% by mass to 1.2% by mass, desirably 0.1% by mass to 1.0% by mass.

Examples of the other optional components include various additives such as a thickener and gas generating agents (e.g., biphenyl (BP) and cyclohexylbenzene (CHB)).

As described above, the negative electrode active material includes the first negative electrode active material particles each having an aspect ratio of 1.5 or less and the second negative electrode active material particles each having an aspect ratio exceeding 1.5 in a mass ratio of 50 : 50 to 95 : 5, 50% or more of the second negative electrode active material particles are aligned such that the angle between the plane direction of the negative electrode active material layer 64 and the major axis of the second negative electrode active material particle is 30° or more, and the nonaqueous solvent of the nonaqueous electrolyte 80 contains 1% by volume to 30% by volume of a carboxylate ester having 4 or less carbon atoms. With this configuration, an increase in resistance caused by repetitive charge and discharge of the lithium ion secondary battery 100 can be suppressed. The reason will be described below.

In the case of repetitive charge and discharge of the lithium ion secondary battery 100, expansion/contraction of the negative electrode active material causes outflow/inflow of the nonaqueous electrolyte 80 from an end portion of the wound electrode body 20. Repetition of the outflow/inflow of the nonaqueous electrolyte 80 causes unevenness of concentration of the electrolyte salt in the wound electrode body 20, which causes an increase in resistance.

In this embodiment, in the second negative electrode active material particles, 50% or more of the second negative electrode active material particles are aligned such that the angle between the plane direction of the negative electrode active material layer 64 and the major axis of the second negative electrode active material particle is 30° or more (see an SEM image in FIG. 5). Thus, the second negative electrode active material particles do not easily allow the nonaqueous electrolyte 80 to move in the plane direction of the negative electrode active material layer 64 (in the left-right direction in the SEM image of FIG. 5), and accordingly, an outflow of the nonaqueous electrolyte 80 from an end portion of the wound electrode body 20 can be suppressed. It should be noted that this alignment state can be obtained when the negative electrode active material contains the first negative electrode active material particles each having an aspect ratio of 1.5 or less and the second negative electrode active material particles each having an aspect ratio exceeding 1.5 in a mass ratio of 50 : 50 to 95 : 5.

On the other hand, in this embodiment, since the nonaqueous solvent of the nonaqueous electrolyte 80 contains 1% by volume to 30% by volume of the carboxylate ester having 4 or less carbon atoms, viscosity of the nonaqueous electrolyte 80 is reduced. Thus, even with a high density of the negative electrode active material layer 64, the nonaqueous electrolyte 80 discharged from the wound electrode body 20 easily returns into the wound electrode body 20.

As a result, an impregnation state of the nonaqueous electrolyte 80 is improved in the entire wound electrode body 20, and occurrence of unevenness of the electrolyte salt concentration in the wound electrode body 20 is suppressed. Accordingly, an increase in resistance caused by repetitive charge and discharge of the lithium ion secondary battery 100 is suppressed.

As described above, the lithium ion secondary battery 100 can suppress an increase in resistance caused by repetitive charge and discharge. The lithium ion secondary battery 100 is applicable to various applications. Examples of desired applications include drive power supplies to be mounted on vehicles such as battery electric vehicles (BEVs), hybrid electric vehicles (HEVs), and plug-in hybrid electric vehicles (PHEVs). The lithium ion secondary battery 100 can be used as a storage battery for, for example, a small-size power storage device.

Since the lithium ion secondary battery 100 suppresses an increase in resistance caused by repetitive charge and discharge, high input/output performance can be maintained for a long term. Thus, the lithium ion secondary battery 100 having excellent input/output characteristics is suitable for a vehicle driving power supply requiring high power generation efficiency, especially suitable for application as a vehicle driving power supply for HEVs. The lithium ion secondary battery 100 can be used in a battery module in which a plurality of batteries are typically connected in series and/or in parallel.

The foregoing description is directed to the square lithium ion secondary battery 100 including the flat wound electrode body 20 as an example. Alternatively, the lithium ion secondary battery can also be configured as a lithium ion secondary battery including a stacked-type electrode body (i.e., electrode body in which a plurality of positive electrodes and a plurality of negative electrodes are alternately stacked). The lithium ion secondary battery can also be configured as a cylindrical lithium ion secondary battery or a laminated-case lithium ion secondary battery.

The secondary battery according to this embodiment can be configured as a nonaqueous secondary battery other than a lithium ion secondary battery according to a known method.

Examples of the present disclosure will now be described in detail, but are not intended to limit the present disclosure to these examples.

### [Examples1 to 10 and Comparative Examples 1 to 3]

### fabrication of Evaluation Lithium Ion Secondary Battery>

As first negative electrode active material particles, spheroidized natural graphite having an average aspect ratio of 1.2 was prepared. As second negative electrode active material particles, scaly natural graphite having an average aspect ratio of 2.5 was prepared. It should be noted that the first negative electrode active material particles and the second negative electrode active material particles were coated with amorphous carbon. The first negative electrode active material particles and the second negative electrode active material particles were mixed at a mass ratio shown in Table 1, thereby preparing a negative electrode active material.

The negative electrode active material, styrene-butadiene rubber (SBR) as a binder, and carboxymethyl cellulose (CMC) as a thickener were mixed with ion-exchanged water at a mass ratio of active material: SBR : CMC = 99 : 0.5 : 0.5, thereby preparing negative electrode slurry. This slurry was applied in a band shape onto each surface of long copper foil with a thickness of 8 µm, and then dried and pressed, thereby producing a negative electrode sheet. A weight per unit area of the negative electrode active material layer per one surface was 4 mg/cm². The press treatment was performed such that the negative electrode density (apparent density of negative electrode active material layer) was 1.0 g/cm³ or more.

First, LiNi_{1/3}Co_{1/3}Mn_{1/3}O₂ (LNCM) as a positive electrode active material, acetylene black (AB) as a conductive agent, and polyvinylidene fluoride (PVdF) as a binder were mixed with N-methylpyrrolidone (NMP) at a mass ratio of LNCM : AB : PVdF = 92 : 5 : 3, thereby preparing positive electrode slurry. This slurry was applied in a band shape onto each surface of long aluminum foil with a thickness of 15 µm, and then dried and pressed, thereby producing a positive electrode sheet.

As a separator, a porous polyolefin sheet (thickness: 20 µm) having a three-layer structure of PP/PE/PP, provided with an HRL (thickness: 4 µm) was prepared. The positive electrode sheet, the negative electrode sheet fabricated as described above, and two separator sheets prepared as described above were stacked and wound, thereby obtaining a wound electrode body. At this time, the HRL of the separator were oriented to face the positive electrode sheet.

A mixed solvent including ethylene carbonate (EC), dimethyl carbonate (DMC), ethyl methyl carbonate (EMC), and a carboxylate ester at a volume ratio of 30 : 30 : 40-x : x was prepared. As shown in Table 1, methyl acetate (MA) or methyl propionate (MP) was used as the carboxylate ester, and the value of x (volume ratio; also referred to % by volume) is shown in Table 1. Into this mixed solvent, lithium bis(oxalate) was dissolved at a concentration of 1.0% by mass, and LiPF₆ as an electrolyte salt was dissolved at a concentration of 1.0 mol/L. In this manner, a nonaqueous electrolyte was obtained.

Terminals and the like were attached to the obtained electrode body, housed in a battery case together with a nonaqueous electrolyte, and sealed, thereby obtaining an evaluation lithium ion secondary battery.

### <Alignment Evaluation of Second Active Material Particles>

A negative electrode of each evaluation lithium ion secondary battery was subjected to ion milling, thereby obtaining a sample of a cross section of a negative electrode active material layer. This sample was observed with a scanning electron microscope (SEM), and a cross-sectional SEM image was obtained. This observation was performed such that the cross-sectional SEM image included copper foil (negative electrode current collector). Aspect ratios of negative electrode active material particles in the cross-sectional SEM image were measured with image analysis software "ImageJ" to thereby identify first negative electrode active material particles each having an aspect ratio of 1.5 or less and second negative electrode active material particles each having an aspect ratio exceeding 1.5. At this time, average aspect ratios of the first negative electrode active material particles and the second negative electrode active material particles were obtained with the image analysis software "Image!"

Then, an angle between a plane direction of the negative electrode active material layer and a major axis of the second negative electrode active material particle was obtained for arbitrarily selected 20 or more second negative electrode active material particles with the image analysis software "ImageJ." At this time, making use of the copper foil shown in the cross-sectional SEM image, the plane direction of the copper foil was defined as the plane direction of the negative electrode active material layer.

The number of second negative electrode active material particles aligned such that the angle described above was 30° or more was counted, and a percentage (%) of these second negative electrode active material particles was calculated from (the number of second negative electrode active material particles aligned at the angle of 30° or more/the number of second negative electrode active material particles measured for the angle) × 100. Table 2 shows the obtained values.

### <Activation Treatment>

Each of the thus-fabricated evaluation lithium ion secondary batteries was placed in a thermostat at 25°C. Each evaluation lithium ion secondary battery was charged with a constant current to 4.10 V at a current value of 0.3 C. Thereafter, the battery was discharged with a constant current to 3.00 V at a current value of 0.3C.

### <Initial Characteristic Evaluation>

Each of the thus-activated evaluation lithium ion secondary batteries was subjected to constant-current/constant-voltage charging in which each of the evaluation lithium ion secondary batteries was charged with a constant current to 4.10 V at a current value of 0.2 C, and then, charged with a constant voltage to a current value of 1/50 C to obtain a fully charged state. Subsequently, the evaluation lithium ion secondary battery was discharged with a constant current to 3.00 V at a current value of 0.2 C. A discharge capacity at this time was measured and defined as an initial capacity.

The initial capacity was defined as an SOC of 100%, and each evaluation lithium ion secondary battery was charged in a thermostat at 25°C at a current value of 1 C until the SOC reached 60%. Then, the lithium ion secondary battery was charged at a current value of 30 C for 10 seconds, and a voltage change amount ΔV at this time was acquired. This voltage change amount ΔV and the current value were used to calculate an initial resistance value of each evaluation lithium ion secondary battery.

### <Cycle Characteristic Evaluation>

Each evaluation lithium ion secondary battery was charged in a thermostat at 25°C at a current value of 1 C until the SOC reached 60%. Next, 2000 cycles of charging and discharging were performed in which one cycle included charging at a current value of 30 C for 10 seconds, rest for 5 seconds, discharging at a current value of 3 C for 100 seconds, and rest for 5 seconds. Thereafter, in the same manner as the initial resistance measurement, a battery resistance after 2000 cycles was obtained. From (battery resistance after 2000 cycles of charging and discharging / initial resistance) × 100, a resistance increase rate (%) was obtained. Table 1 shows the results.

### [Table 1]

**Table 1**

| | Negative Electrode Active Material Mass Ratio | | Percentage (%) of Particles with Alignment Angle of 30° or More | Carboxylate Ester | | Resistance Increase Rate (%) |
|---|---|---|---|---|---|---|
| | First | Second | | Type | Volume Ratio x (vol%) | |
| Example 1 | 50 | 50 | 58 | MA | 3 | 105 |
| Example 2 | 65 | 35 | 55 | MA | 3 | 106 |
| Example 3 | 82 | 18 | 55 | MA | 3 | 108 |
| Example 4 | 90 | 10 | 53 | MA | 3 | 110 |
| Example 5 | 95 | 5 | 52 | MA | 3 | 115 |
| Example 6 | 50 | 50 | 58 | MP | 3 | 106 |
| Example 7 | 50 | 50 | 58 | MA | 1 | 105 |
| Example 8 | 50 | 50 | 58 | MA | 6 | 105 |
| Example 9 | 50 | 50 | 58 | MA | 15 | 104 |
| Example 10 | 50 | 50 | 58 | MA | 30 | 103 |
| Comparative Example 1 | 48 | 52 | 58 | MA | 3 | 120 |
| Comparative Example 2 | 96 | 4 | 40 | - | 3 | 135 |
| Comparative Example 3 | 50 | 50 | 58 | MA | 0 | 134 |

As shown in Table 1, it can be understood that in the case where the negative electrode active material includes the first negative electrode active material particles each having an aspect ratio of 1.5 or less and the second negative electrode active material particles each having an aspect ratio exceeding 1.5 in a mass ratio of 50 : 50 to 95 : 5, 50% or more of the second negative electrode active material particles are aligned such that the angle between the plane direction of the negative electrode active material layer and the major axis of the second negative electrode active material particle is 30° or more, and the nonaqueous solvent of the nonaqueous electrolyte contains 1% by volume to 30% by volume of a carboxylate ester having 4 or less carbon atoms, an increase in resistance caused by repetitive charge and discharge of the lithium ion secondary battery 100 is small. This result demonstrates that the nonaqueous electrolyte secondary battery disclosed here is capable of suppressing an increase in resistance caused by repetitive charge and discharge.

Specific examples of the present disclosure have been described in detail hereinbefore, but are merely illustrative examples, and are not intended to limit the scope of claims. The techniques described in claims include various modifications and changes of the above exemplified specific examples.

That is, the nonaqueous electrolyte secondary battery disclosed here is any one of items [1] to [7].
[1] A nonaqueous electrolyte secondary battery including:
   a positive electrode;
   a negative electrode; and
   a nonaqueous electrolyte, wherein
   the negative electrode includes a negative electrode active material layer containing a negative electrode active material,
   the negative electrode active material includes first negative electrode active material particles each having an aspect ratio of 1.5 or less and second negative electrode active material particles each having an aspect ratio exceeding 1.5,
   a mass ratio between the first negative electrode active material particles and the second negative electrode active material particles is 50 : 50 to 95 : 5,
   50% or more of the second negative electrode active material particles are aligned such that an angle between a plane direction of the negative electrode active material layer and a major axis of the second negative electrode active material particle is 30° or more,
   the nonaqueous electrolyte contains a nonaqueous solvent and an electrolyte salt, and
   the nonaqueous solvent contains 1 to 30% by volume of a carboxylate ester having 4 or less carbon atoms.
[2] The nonaqueous electrolyte secondary battery of item [1] in which an average aspect ratio of the first negative electrode active material particles is 1.0 to 1.4, and an average aspect ratio of the second negative electrode active material particles is 2.0 to 7.0.
[3] The nonaqueous electrolyte secondary battery of item [1] or [2] in which the first negative electrode active material particles are spheroidized natural graphite particles, and the second negative electrode active material particles are scaly natural graphite particles.
[4] The nonaqueous electrolyte secondary battery of any one of items [1] to [3] in which a mass ratio between the first negative electrode active material particles and the second negative electrode active material particles is 50 : 50 to 65 : 45.
[5] The nonaqueous electrolyte secondary battery of any one of items [1] to [4] in which the carboxylate ester is methyl acetate.
[6] The nonaqueous electrolyte secondary battery of any one of items [1] to [5] in which the nonaqueous solvent contains 15% by volume to 30% by volume of the carboxylate ester.
[7] The nonaqueous electrolyte secondary battery of any one of items [1] to [6] in which the nonaqueous electrolyte secondary battery is a battery of a vehicle driving power supply of a hybrid vehicle.

## Claims

1. A nonaqueous electrolyte secondary battery (100) comprising:
a positive electrode (50):
a negative electrode (60); and
a nonaqueous electrolyte (80), wherein
the negative electrode (60) includes a negative electrode active material layer (64) containing a negative electrode active material,
the negative electrode active material includes first negative electrode active material particles (66) each having an aspect ratio of 1.5 or less and second negative electrode active material particles (68) each having an aspect ratio exceeding 1.5,
a mass ratio between the first negative electrode active material particles (66) and the second negative electrode active material particles (68) is 50 : 50 to 95 : 5,
50% or more of the second negative electrode active material particles (68) are aligned such that an angle between a plane direction of the negative electrode active material layer (64) and a major axis of the second negative electrode active material particle (68) is 30° or more,
the nonaqueous electrolyte (80) contains a nonaqueous solvent and an electrolyte salt, and
the nonaqueous solvent contains 1 to 30% by volume of a carboxylate ester having 4 or less carbon atoms.

2. The nonaqueous electrolyte secondary battery (100) according to claim 1, wherein an average aspect ratio of the first negative electrode active material particles (66) is 1.0 to 1.4, and an average aspect ratio of the second negative electrode active material particles (68) is 2.0 to 7.0.

3. The nonaqueous electrolyte secondary battery (100) according to claim 1, wherein the first negative electrode active material particles (66) are spheroidized natural graphite particles, and the second negative electrode active material particles (68) are scaly natural graphite particles.

4. The nonaqueous electrolyte secondary battery (100) according to claim 1, wherein a mass ratio between the first negative electrode active material particles (66) and the second negative electrode active material particles (68) is 50 : 50 to 65 : 45.

5. The nonaqueous electrolyte secondary battery (100) according to claim 1, wherein the carboxylate ester is methyl acetate.

6. The nonaqueous electrolyte secondary battery (100) according to claim 1, wherein the nonaqueous solvent contains 15% by volume to 30% by volume of the carboxylate ester.

7. The nonaqueous electrolyte secondary battery (100) according to claim 1, wherein the nonaqueous electrolyte secondary battery (100) is a battery of a vehicle driving power supply for hybrid vehicles.
